# EUROPÄISCHE PATENTANMELDUNG

(11) **EP 2 067 913 A2**
(43) Veröffentlichungstag der Anmeldung: **10.06.2009**
(21) Anmeldenummer: 08000101.9
(22) Anmeldetag: 04.01.2008
(51) Int. Cl.: E04H 12/10, F03D 11/04, E02B 17/00

(54) **Gitterstruktur eines Offshore-Bauwerks, insbesondere einer Offshore-Windenergieanlage**

(30) Priorität: 04.12.2007 EP 07023389
(71) Anmelder: WeserWind GmbH, 27572 Bremerhaven (DE)
(72) Erfinder: Kassen, Dirk Dipl.-Ing., 49124 Georgsmarienhütte (DE)
(74) Vertreter: Möller, Friedrich

(57) **Zusammenfassung**

Gitterstrukturen für Offshore-Bauwerke stehen im Wasser und sind somit insbesondere in Salzwasser einer elektrochemischen Korrosion ausgesetzt. Um eine solche Korrosion der Gitterstruktur zu vermeiden, sind Opferanoden (27) vorgesehen. Diese sind bislang an Rohren (17) der Gitterstruktur angeschraubt. Dazu müssen Löcher in die Rohre (17) gebohrt werden, was die Stabilität beeinträchtigt und das Eindringen von Feuchtigkeit in das Innere der Gitterstruktur ermöglicht.

Die Erfindung sieht es vor, als separate Knotenteile (19) ausgebildete Knotenpunkte (14) der Gitterstruktur mit Halterungen, beispielsweise Bügeln (24), zu versehen, die an die Knotenteile (19) gegossen werden. Ohne irgendwelche Bohrungen können Opferanoden (27) an den Bügeln (24) oder sonstigen Halterungen befestigt werden.

## Beschreibung

Die Erfindung betrifft eine Gitterstruktur eines Offshore-Bauwerks, insbesondere einer Offshore-Windenergleanlage, gemäß dem Oberbegriff des Anspruchs 1.

Gitterstrukturen der hier angesprochenen Art werden für Offshore-Bauwerke verwendet. Bevorzugt dienen solche Gitterstrukturen als Gründungsstrukturen für Offshore-Bauwerke. Diese Gründungsstrukturen befinden sich mindestens größtenteils unter Wasser und stellen quasi das Fundament der Offshore-Bauwerke, insbesondere Offshore-Windenergieanlagen, dar.

Die Gitterstrukturen sind als dreidimensionate Rahmentragwerke ausgebildet mit aufrechten bzw. leicht geneigten Säulen in den Kanten- bzw. Eckbereichen und vorzugsweise diagonalgerichteten Streben zu Versteifungszwecken. Die Säulen und Streben werden üblicherweise aus Rohren gebildet, können aber auch aus Stangen bestehen. Die Rohren oder Stangen der Säulen und Streben sind an Knotenpunkten miteinander verbunden, vorzugsweise verschweißt.

Die Gitterstrukturen sind aufgrund Ihrer Anordnung im Seewasser, insbesondere bei Salzwasser, einer elektrochemischen Korrosion ausgesetzt. Um die Gitterstrukturen hiergegen zu schützen, sind sie mit sogenannten Opferanoden vorgesehen. Bei bekannten Gitterstrukturen sind die Opferanoden an den Rohren zur Bildung der Säulen und/oder Streben angeschraubt. Durch die Schraublöcher werden die Gitterstrukturen geschwächt und es kann Seewasser ins Innere der Rohre eindringen.

Der Erfindung liegt die Aufgabe zugrunde, eine Gründungsstruktur für ein Offshore-Bauwerk, insbesondere eine Offshore-Windenergieanlage, zu schaffen, die eine Montage und ein leichtes Auswechseln von Opferanoden ohne Beeinträchtigung der Gitterstrukturen zulässt.

Eine Gitterstruktur zur Lösung der Aufgabe weist die Merkmale des Anspruchs 1 auf. Demnach sind die Knotenpunkten als separate Knotenteile ausgebildet, die mit den Streben bzw. Säulen verschweißt sind. Es ist mindestens einigen Knotenteilen eine Halterung zur lösbaren Anbringung mindestens einer Opferanode zugeordnet. Gegebenenfalls können ausgewählte Knotenteile auch mehrere Halterungen aufweisen. Die mindestens eine Halterung ermöglicht eine lösbare Anordnung der Opferanoden ohne die Gitterstruktur schwächende und zu Undichtigkeiten führende Bohrungen in der Wandung der Knotenteile.

Bevorzugt ist vorgesehen, die jeweilige Halterung frei zugänglich am Kontenteil anzuordnen, und zwar vorzugsweise seitlich nach außen abstehend an einer Seitenfläche des jeweiligen Knotenteils. Die Halterung kann ohne schwächende Bohrungen am jeweiligen Knotenteil befestigt sein. Schraublöcher oder Durchbrüche zur Befestigung der jeweiligen Opferanode am Knotenteil können der Halterung zugeordnet sein, wodurch diese das Knotenteil nicht schwächen und keinen Wassereintritt in das hohle Innere des Knotenteile zulassen. Durch die seitlich abstehende Anordnung der jeweiligen Halterung am Knotenteil ist eine gute Zugänglichkeit der Halterung zur Montage und Demontage der jeweiligen Opferanode gegeben. Vor allem kann so ein einfacher Austausch von Opferanoden oder Ersatz verbrauchter Opferanoden nachträglich unter Wasser von Tauchern einfach vorgenommen werden. Ein solcher Ersatz oder Austausch von Opferanoden ist besonders einfach, wenn gemäß einer weiteren Ausgestaltung der Erfindung die Halterung freiliegend am betreffenden Knotenteil, insbesondere einer Außenfläche desselben, angeordnet ist. So ist die jeweilige Opferanode größtenteils dem Seewasser ausgesetzt, wodurch sie ihre Wirkung optimal entfalten kann.

Gemäß einer vorteilhaften Weiterbildung der Erfindung ist vorgesehen, dass die mindestens eine Opferanode an der Halterung lösbar anbringbar ist. Das kann vorzugsweise durch Schrauben, Klemmen und/oder Fügen erfolgen. In jedem Fall ist ein leichter Austausch verbrauchter Opferanoden gegen neue Opferanoden auch unter Wasser leicht möglich. Insbesondere wenn die Opferanoden an der Halterung klemmend befestigt werden, beispielsweise durch Einschieben der entsprechenden Führungen, kann die Demontage und Montage von Opferanoden rasch und einfach ohne Schrauben und mithin ohne Werkzeug durchgeführt werden.

Die Halterungen können im Rahmen der Erfindung auf unterschiedliche Weise ausgebildet sein. So können die Halterungen Bügel, Haken, Stäbe, Taschen oder Platten sein, die seitlich am betreffenden Knotenteil abstehen. Vor allem bei der Ausbildung der Halterung als ein Bügel, ein Haken oder ein Stab kann die jeweilige Opferanode einfach an der Halterung befestigt werden, indem sie einen Bereich des Stabs, des Bügels oder des Hakens umgibt. Wenn die Halterung als ein Bügel ausgebildet ist, braucht die Opferanode nur einen Schenkel desselben zu umgeben; denn aufgrund der bügelförmigen Ausbildung der Halterung wird dadurch die Opferanode hieran formschlüssig fixiert, ohne dass sich die Opferanode vom Bügel lösen kann, selbst wenn sie diesen mit Spiel umgibt und dadurch auf dem Schenkel des Bügels verschiebbar ist.

Die Opferanoden sind nach einem weiteren Vorschlag der Erfindung bevorzugt mehrteilig ausgebildet. Beispielsweise können die Opferanoden zweiteilig ausgebildet sein. Durch das Verbinden der einzelnen Teile der Opferanode, beispielsweise durch Zusammenschrauben der Teile, entsteht eine ringförmige Opferanode, die die Halterung, insbesondere einen Bügel, einen Stift oder einen Haken, umgreift. Bei einem offenen Haken oder einem Stab braucht die Opferanode zur Montage und Demontage nicht vollständig auseinander genommen zu werden. Es reicht, wenn die Schrauben zum Zusammenhalten der einzelnen Teile der Opferanode gelöst werden, so dass die ringförmige Opferanode auf den Stab oder den Haken aufschiebbar ist. Durch Anziehen der Schrauben wird die Opferanode auf der Halterung festgeklemmt. Die klemmende Verbindung der Opferanode mit der Halterung kann leicht hergestellt und ebenso leicht wieder gelöst werden.

Wenn die Halterung als eine seitlich am jeweiligen Knotenteil abstehende Platte ausgebildet ist, kann eine einteilige Opferanode leicht auf die Platte aufgeschraubt werden. Denkbar ist es aber auch, auf gegenüberliegenden Seiten der Platte jeweils einen Teil einer mehrteiligen, insbesondere zweiteiligen, Opferanode anzuordnen. Durch Zusammenschrauben der einzelnen Teile der Opferanode durch die Platte hindurch erfolgt eine dauerhafte, aber lösbare, Verbindung der Opferanode mit der plattenartigen Halterung. Denkbar ist es aber auch, dass die Platte einen Durchbruch aufweist, durch die ein eingeschnürter Abschnitt bzw. Vorsprung mindestens eines Teils der Opferanode hindurchgeführt ist, oder in die der Abschnitt der Opferanode hineinragt. Dieser eingeschnürte Bereich ragt dann bei zusammengeschraubten Teilen der Opferanode formschlüssig in den Durchbruch oder den Ausschnitt der als Platte ausgebildeten Halterung hinein und dient dadurch auch zur dauerhaften und sicheren Befestigung der Opferanode an der Halterung.

Die Knotenteile sind bevorzugt aus einem schweißbaren Werkstoff gegossen, insbesondere aus Stahlguss, Solche Knotenteile lassen sich einfach herstellen. Beim Gießen des Knotenteits wird die jeweilige Halterung für mindestens eine Opferanode mit dem Knotenteil hergestellt. Dadurch ist die Halterung integraler, einstückiger Bestandteil des Knotenteils, Denkbar ist es aber auch, am Knotenteil die Halterung für die mindestens eine Opferanode nachträglich zu befestigen, beispielsweise durch Schweißen. Die mit mindestens einer Halterung versehenen Knotenteile werden mit den Rohren oder auch Stangen zur Bildung der Säulen und Streben der Gitterstruktur ebenfalls verschweißt. Nachdem die Gitterstruktur fertiggestellt ist, können an diese die Opferanoden leicht montiert werden, und zwar gegebenenfalls auch noch nach der Verankerung der Gitterstruktur auf dem Meeresboden. Es brauchen lediglich die Opferanoden an den seitlich abstehenden, frei zugänglichen Halterungen der Knotenteile befestigt zu werden, und zwar ohne mechanische Bearbeitungen der Knotenteile durch zum Beispiel Bohren.

Ein bevorzugtes Ausführungsbeispiel der Erfindung wird nachfolgend anhand der Zeichnung näher erläutert. In dieser zeigen:

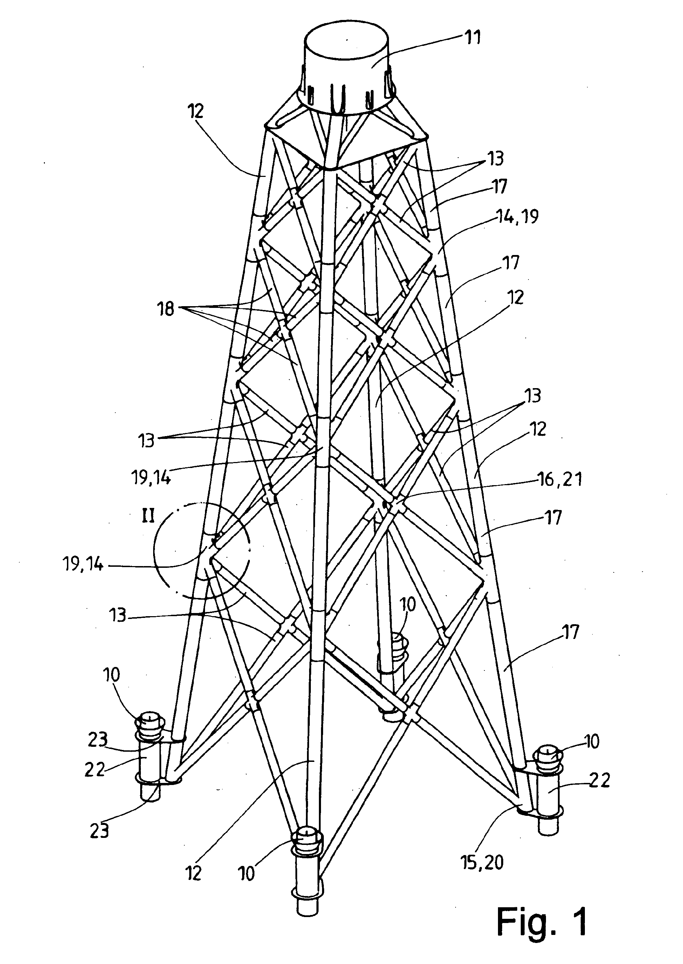

- Fig. 1: eine perspektivische Ansicht einer Gitterstruktur (ohne Darstellung der Opferanoden),
- Fig. 2: eine Einzelheit II der Fig. 1 im Bereich eines Knotenteils mit einer Opferanode,
- Fig. 3: ein Knotenteil der Fig. 2 mit einer Halterung für die Opferanode gemäß einem alternativen Ausführungsbeispiel der Erfindung, und
- Fig. 4: einen Schnitt IV-IV durch das Knotenteil und die daran befestigte Opferanode in einem größeren Maßstab.

Die in den Figuren gezeigte Gitterstruktur ist beispielsweise vorgesehen als Gründungsstruktur einer Offshore-Windenergieanlage. Die als Fundament für die Offshore-Windenergieanlage dienende Gitterstruktur wird auf den Meeresboden aufgesetzt und dort mit Pfahlhüsen 10 verankert. Die Gitterstruktur ist größtenteils im Wasser angeordnet. Sie ragt nur mit einem oberen Ende, nämlich mit einem Übergangsstück 11, aus dem Wasser heraus. Mit dem Übergangsstück 11 wird der Fuß eines Turms einer Windenergieanlage verbunden.

Die hier gezeigte Gitterstruktur ist als dreidimensionales Rahmentragwerk ausgebildet. Dazu verfügt die Gitterstruktur über hochragende Säulen 12 und überwiegend diagonalgerichtete Streben 13. Die Streben 13 sind mit den Säulen 12 an Knotenpunkten 14 bzw. 15 verbunden. Die in den Figuren gezeigte Gitterstruktur verfügt über vier Säulen 12 an den vier Ecken bzw. aufragenden Kanten der dreidimensionalen Gitterstruktur. Bei der gezeigten Gitterstruktur sind die Säulen 12 leicht gegenüber der Vertikalen geneigt, laufen nämlich in Richtung zum Übergangsstück 11 am oberen Ende der Gitterstruktur etwa konvergierend, so dass sich der Abstand der Säulen 12 ausgehend von den Knotenpunkten 15 an den unteren Enden der Säulen 12 zum oberen Übergangsstück 11 hin kontinuierlich verringert. Die Säulen 12 laufen aber am oberen Ende der Gitterstruktur nicht zusammen, so dass sie unterhalb des Übergangsstücks 11 auch noch beabstandet sind. In jeder von zwei benachbarten Säulen 12 aufgespannten trapezförmigen Ebene sind die Streben 13 angeordnet. Im gezeigten Ausführungsbeispiel verlaufen die Streben 13 diagonal zwischen zwei übereinanderliegenden Knotenpunkten 14, 15 einerseits und zweier benachbarter Säulen 12 andererseits. Dadurch kreuzen sich die diagonalen Streben 13 in Knotenpunkten 16. Bei der hier gezeigten Gitterstruktur sind vier Etagen sich kreuzender Streben 13 und Knotenpunkte 14 übereinander angeordnet.

Die Erfindung ist nicht auf Gitterstrukturen mit vier Säulen 12 beschränkt. Die Erfindung eignet sich auch für Gitterstrukturen mit nur drei Säulen 12 oder mehr als vier Säulen 12. Ebenso können die Säulen 12 senkrecht verlaufen oder unterschiedlich geneigt sein. Schließlich können die Streben in weniger oder mehr als vier übereinanderliegenden Etagen angeordnet sein und auch andere Verläufe aufweisen. Beispielsweise müssen sich nicht zwei Streben 13 an einem Knotenpunkt 16 kreuzen.

Die Säulen 12 und Streben 13 sind aus Rohren 17, 18 entsprechender Längen gebildet. Gegebenenfalls können die Säulen 12 und/oder Streben 13 auch aus massiven Stangen mit beliebigen Querschnitten gebildet sein. Die Rohre 17 der Säulen 12 weisen einen größeren Durchmesser auf als die Rohre 18 der Streben 13. Im Querschnitt sind die Rohre 17 und 18 der Säulen 12 und Streben rund ausgebildet. Die Säulen 12 und/oder Streben 13 können aber auch über andere Querschnitte, beispielsweise elliptische oder ovale Querschnitte, verfügen.

Die Enden der Streben 13 sind nicht unmittelbar mit den Säulen 12 verschweißt, sondern durch im Bereich der Knotenpunkte 14, 15 und vorzugsweise auch 16 vorgesehene Knotenteile 19, 20 und 21 verbunden. Abweichend vom gezeigten Ausführungsbeispiel können die Streben 13 an ihren Kreuzungsstellen, nämlich den Knotenpunkten 16, direkt miteinander verschweißt sein, insbesondere wenn die Streben 13 sich rechtwinklig kreuzen.

Die Knotenteile 20 an den unteren Enden der Säulen 12 dienen zur Verbindung der Gitterstruktur mit den Gründungspfählen 10. Zu diesem Zweck sind mit den unteren Knotenteilen 20 der Säulen 12 senkrechte Pfahlhülsen 22 verbunden. Durch die Pfahlhülsen 22 erstrecken sich die Gründungspfähle 10 zur Verankerung der Gitterstruktur auf dem Meeresboden. Die Pfahlhülsen 22 sind durch zwei voneinander beabstandete, vorzugsweise horizontale Platten 23 mit dem jeweiligen unteren Knotenteil 20 verbunden. Im gezeigten Ausführungsbeispiel sind die Platten 23 dem oberen und unteren Ende des jeweiligen Knotenteils 20 zugeordnet. Dazu sind die Platten 23 brillenartig ausgebildet, indem sie die Ränder der Knotenpunkte 15 und die Pfahlhülsen 22 umgeben. Die Platten 23 sind mit den Knotenteilen 20 und mit den Pfahlhülsen 22 verschweißt.

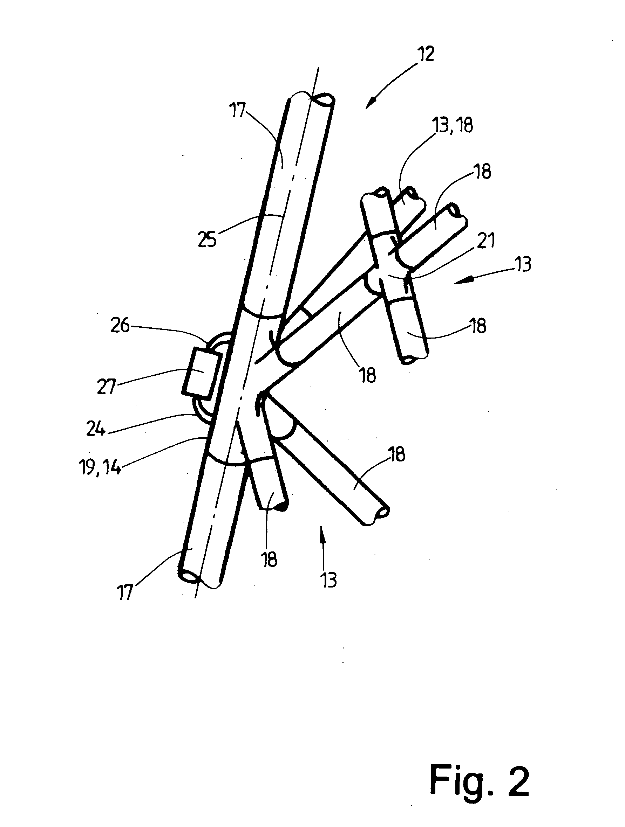

Die Erfindung sieht es vor, die nur in den Fig. 2 bis 4 gezeigte Opferanoden einigen Knotenpunkten 14, 15 bzw. 16 in besonderer Weise zuzuordnen bzw. hiermit zu verbinden. Demnach verfügen diejenigen Knotenpunkte, die mit Opferanode versehen werden sollen, über Halterungen für mindestens eine Opferanode. Im gezeigten Ausführungsbeispiel ist nur ein Knotenteil 19 mit einer Opferanode versehen. Es können aber mehrere Knotenteile 19 und gegebenenfalls auch die Knotenteile 20 und/oder 21 Opferanoden aufweisen.

Die Halterungen für die Opferanoden sind außen am Knotenteil 19 angeordnet, und zwar gegenüber der Außenfläche seitlich abstehend. Die Halterungen sind bei der Herstellung des Knotenteils 19 an dasselbe angegossen, wodurch die Halterung integrierter Bestandteil des insgesamt als Gussknoten ausgebildeten Knotenteils 19 wird.

Beim Ausführungsbeispiel der Fig. 2 ist die Halterung als ein Bügel 24 ausgebildet Der Bügel 24 liegt in einer aufrechten Ebene, die in Radialrichtung des Knotenteils 19 verläuft, nämlich von der Längsmittelachse 25 des Knotenteils 19 sich radial nach außen erstreckt und damit aus dem von der Gitterstruktur eingeschlossenen Raum herausragt. Der Bügel 24 verfügt über einen mit Abstand parallel zur Außenseite des Knotenteils 19 verlaufenden, geraden Schenkel 26. Im Bereich dieses Schenkels 26 ist die Opferanode 27 mit dem Bügel 24 verbunden. Dabei umgibt die Opferanode 27 den Schenkel 26 des Bügels 24, so dass die Opferanode 27 formschlüssig mit dem Bügel 24 des Knotenteils 19 verbunden ist. Die Opferanode 27 ist zur Montage am Schenkel 26 des Bügels 24 zweiteilig ausgebildet. Die Opferanode 27 besteht dazu aus zwei Halbschalen. In einer senkrecht durch den Schenkel 26 des Bügels 24 verlaufende Trennebene liegen die Halbschalen der Opferanode 27 aneinander an. Verbunden sind die Halbschalen der Opferanode 27 durch geeignete Befestigungsmittel, wie Schrauben oder Ähnliches, beispielsweise Raststifte.

Die beschriebene Verbindung der aus zwei Halbschalen gebildeten Opferanode 27 mit dem Bügel 24 des Knotenteils 19 erfordert weder Bohrungen noch sonstige nachträgliche Bearbeitungen des Knotenteils 19. Insbesondere benötigt durch die zweiteilige Ausbildung der Opferanode 27 auch der Bügel 24 keine nachträglichen Bearbeitungen, um die Opferanode 27 durch direktes Zusammenschrauben der beiden Halbschalen am Bügel 24 zu befestigen.

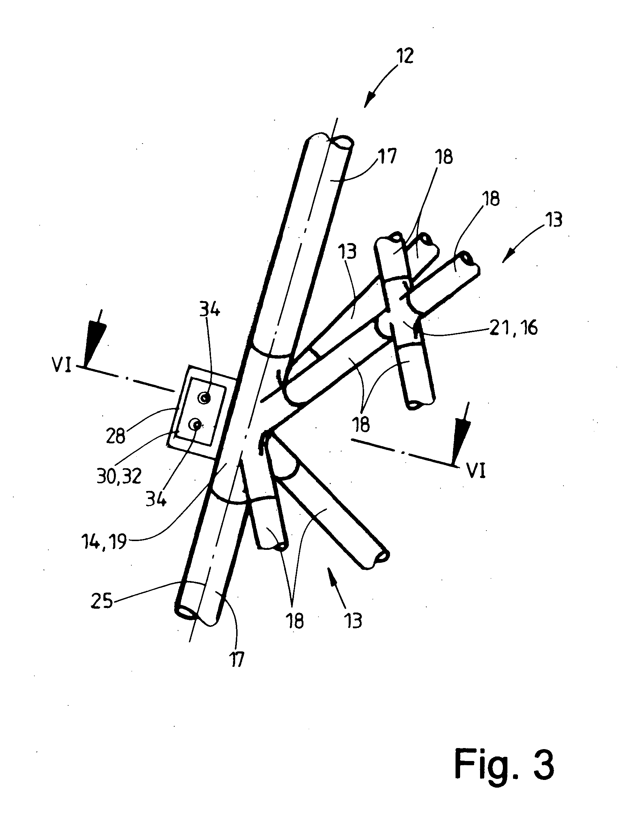

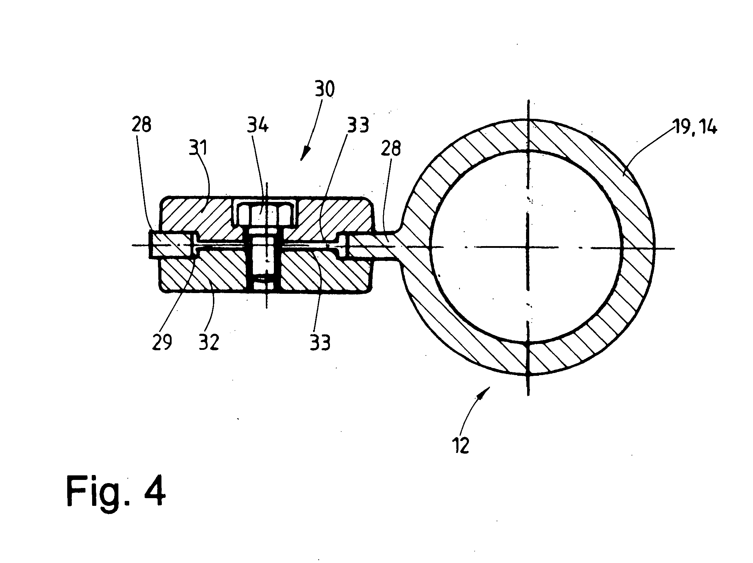

Die Fig. 3 und 4 zeigen ein zweites Ausführungsbeispiel der Erfindung. Bei diesem Ausführungsbeispiel ist die Halterung aus einer außen seitlich abstehend am Knotenteil 19 angegossenen Platte 28 gebildet. Die aufrechte, ebene Platte 28 erstreckt sich radial gegenüber der Außenwandung des Knotenteils 19 nach außen, liegt also auf einer Längsmittelebene, die sich durch die Längsmittelachse 25 des Knotenteils 19 erstreckt. Die Platte 28 ist so dem Knotenteil 19 zugeordnet, dass sie gegenüber dem von den Säulen 12 und den Streben 13 umfassten Raum der Gitterstruktur nach außen weist.

Die Platte 28 verfügt über einen Durchbruch 29. Gegebenenfalls sind auch mehrere Durchbrüche 29 denkbar. Der Durchbruch 29 dient zur formschlüssigen Befestigung der Opferanode 30 an der Platte 28. Dazu ist auch diese Opferanode 30 zweiteilig ausgebildet, besteht nämlich aus zwei Anodenteilen 31, 32, die auf ihren zur Platte 28 weisenden Seiten jeweils einen Vorsprung 33 aufweisen, der mit dem Durchbruch 29 in der Platte 28 korrespondiert, vorzugsweise etwas kleiner ist. Im gezeigten Ausführungsbeispiel sind beide Anodenteile 31 und 32 der Opferanode 30 gleich ausgebildet, verfügen nämlich jeweils über einen Vorsprung 33, der etwas flacher ist als die halbe Dicke der Platte 28. Mit den Vorsprüngen 33 sind beide Anodenteile 31 und 32 in der Platte 28 arretiert. Durch Zusammenschrauben der beiden Anodenteile 31 und 32 durch mindestens eine Schraube 34 im Bereich des Durchbruchs 29 der Platte 28 werden die Anodenteile 31 und 32 der Opferanode 30 im Durchbruch 29 der Platte 28 befestigt.

Es sind alternative Ausführungsbeispiele für Halterungen denkbar, die in den Figuren nicht dargestellt sind. Beispielsweise kann die Platte einen oben offenen, taschenartigen Durchbruch aufweisen. Dann kann die Opferanode einstückig ausgebildet sein, wobei sie an gegenüberliegenden aufrechten Kanten Nuten aufweist, mit denen die Opferanode von oben in den taschenförmigen Durchbruch in der Platte eingesteckt werden kann, und zwar nach Art einer Nut-Federverbindung. Durch das Eigengewicht bleibt die Opferanode dann in dem taschenförmigen Durchbruch stecken. Auf diese Weise brauchen keine Schrauben vorhanden zu sein, die die Befestigung der Opferanode am Knotenteil 19 oder auch anderen Knotenteilen 20 und/oder 21 herbeiführen.

Gemäß einer anderen Alternative kann am Knotenteil 19 oder auch an den anderen Knotenteilen 20 bzw. 21 eine oben offene Taschen angeordnet sein, in die Opferanoden von oben eingelegt werden. Die Opferanoden verbleiben in den Taschen durch ihr Eigengewicht. Gegebenenfalls können die Taschen zur zusätzlichen Sicherung der Opferanoden aber auch einen Deckel oder einen sonstigen Verschluss aufweisen.

### Bezugszeichenliste:

- 10: Gründungspfahl
- 11: Übergangsstück
- 12: Säule
- 13: Strebe
- 14: Knotenpunkt
- 15: Knotenpunkt
- 16: Knotenpunkt
- 17: Rohr
- 18: Rohr
- 19: Knotenteil
- 20: Knotenteil
- 21: Knotenteil
- 22: Pfahlhülse
- 23: Platte
- 24: Bügel
- 25: Längsmittelachse
- 26: Schenkel
- 27: Opferanode
- 28: Platte
- 29: Durchbruch
- 30: Opferanode
- 31: Anodenteil
- 32: Anodenteil
- 33: Vorsprung
- 34: Schraube

## Patentansprüche

1. Gitterstruktur eines Offshore-Bauwerks, insbesondere einer Offshore-Windenergieanlage, mit miteinander an Knotenpunkten (14, 15, 16) verbundenen Streben (13) und/oder Säulen (12), **dadurch gekennzeichnet, dass** die Knotenpunkte (14, 15, 16) als Knotenteile (19, 20, 21) ausgebildet sind und wenigstens einige Knotenteile (19, 20, 21) eine Halterung zur lösbaren Anbringung mindestens einer Opferanode (27, 30) aufweisen.

2. Gitterstruktur nach Anspruch 1, **dadurch gekennzeichnet dass** die mit Opferanoden (27, 30) zu versehenden Knotenteile (19) mindestens eine Halterung wenigstens für eine Opferanode (27, 30) aufweisen.

3. Gitterstruktur nach Anspruch 2, **dadurch gekennzeichnet dass** die Halterung frei zugänglich am Knotenteil (19) angeordnet ist.

4. Gitterstruktur nach Anspruch 2 oder 3, **dadurch gekennzeichnet, dass** die Halterung abstehend am betreffenden Knotenteil (19), insbesondere einer Außenfläche desselben, angeordnet ist.

5. Gitterstruktur nach einem der Ansprüche 2 bis 4, **dadurch gekennzeichnet, dass** mindestens eine Opferanode (27, 30) an der Halterung lösbar anbringbar ist, vorzugsweise durch Schrauben, Klemmen und/oder Fügen.

6. Gitterstruktur nach einem der Ansprüche 2 bis 5, **dadurch gekennzeichnet, dass** die Halterung als ein seitlich am betreffenden Knotenteil (19) abstehender Bügel (24), eine Platte (28), ein Haken oder ein Stab ausgebildet ist.

7. Gitterstruktur nach einem der Ansprüche 2 bis 6, **dadurch gekennzeichnet, dass** die Opferanode (27) insbesondere eine als Stab, Haken oder Bügel (24) ausgebildete Halterung umgibt.

8. Gitterstruktur nach Anspruch 7, **dadurch gekennzeichnet dass** die Opferanode (27) mehrteilig, insbesondere zweiteilig, ausgebildet ist, wobei durch Verbinden, insbesondere lösbares Verbinden, durch beispielsweise Schrauben, die Opferanode (27) den Bügel (24), Stab oder Haken klemmend umgreift.

9. Gitterstruktur nach einem der vorhergehenden Ansprüche, **dadurch gekennzeichnet, dass** die Knotenteile (19, 20, 21) aus einem schweißbaren Werkstoff, insbesondere Stahl, gegossen sind.

10. Gitterstruktur nach Anspruch 9, **dadurch gekennzeichnet, dass** die Halterung für mindestens eine Opferanode (27, 30) an das betreffende Knotenteil angegossen ist.
